# EUROPÄISCHE PATENTSCHRIFT

(11) **EP 3 255 298 B1**
(45) Veröffentlichungstag und Bekanntmachung des Hinweises auf die Patenterteilung: **12.12.2018**
(21) Anmeldenummer: 17174085.5
(22) Anmeldetag: 01.10.2014
(51) Int. Cl.: F16D 55/226, F16D 65/00, F16D 65/095

(54) **SCHEIBENBREMSE UND BREMSBELAGSATZ EINER SCHEIBENBREMSE**
DISK BRAKE AND BRAKE LINING SET OF A DISK BRAKE
FREIN À DISQUE ET JEU DE GARNITURE DE FREIN D'UN FREIN À DISQUE

(30) Priorität: 04.10.2013 DE 102013016312
(43) Veröffentlichungstag der Anmeldung: 13.12.2017
(62) Teilanmeldung aus: 14777635.5
(73) Patentinhaber: KNORR-BREMSE Systeme für Nutzfahrzeuge GmbH, 80809 München (DE)
(72) Erfinder: RGUICHI, Abdelaziz, 82140 Olching (DE); ADAMCZYK, Philipp, 87677 Stöttwang (DE); KLINGNER, Matthias, 82272 Moorenweis (DE); WERTH, Alexander, 80999 München (DE); PESCHEL, Michael, 82296 Schöngeising (DE); THEIL, Robert, 82299 Türkenfeld (DE)
(74) Vertreter: Specht, Peter

(56) Entgegenhaltungen:
- WO-A1-2014/041157
- WO-A1-2014/041161
- DE-A1-102005 019 255
- US-A1- 2007 119 665

## Beschreibung

Die vorliegende Erfindung betrifft eine Scheibenbremse, insbesondere Schiebesattelscheibenbremse, mindestens aufweisend einen ortsfest fixierten Bremsträger, der zwei Paar Trägerhörner aufweist, durch die ein reaktionsseitiger Bremsbelag und ein zuspannseitiger Bremsbelag gehalten werden, einen Bremssattel, der durch Zugstreben sowie einen Bremssattelrücken gebildet wird, sowie eine Zuspannmechanik.

Kraftführende Bauteile derartiger Scheibenbremsen werden üblicherweise einstückig durch ein Urformverfahren hergestellt, vorzugsweise im Sandgießverfahren, wobei als Werkstoff vorzugsweise Gusseisen mit Kugelgraphit bzw. Sphäroguss eingesetzt wird. Das so entstandene Gussrohteil wird anschließend spanend fertig bearbeitet, so dass z.B. ein einbaubarer Bremsträger bzw. ein einbaubarer Bremssattel entsteht. Derartige einstückige Bremsträger bzw. Bremssattel aus Sphäroguss nach dem Stand der Technik haben sich grundsätzlich bewährt, weisen aber einige Nachteile auf, die sich insbesondere im Anwendungsbereich der schweren Nutzfahrzeuge negativ auswirken.

So weisen die Bremsträger bzw. Bremssattel nach dem Stand der Technik auf Grund der Festigkeitsanforderungen an den Bremsträger sowie auf Grund eines beengten Bauraumes für den Bremsträger und der daraus resultierenden, bisherigen geometrischen Gestaltung ein Gewicht auf, das weiteres Optimierungspotential bieten sollte.

Ergänzend sei hier noch die EP 0 139 890 A1 und die US 2007/119665 A1 erwähnt, in der u.a. unterschiedlich große Bremsbeläge offenbart werden.

Die gattungsgemäße DE 10 2005 019255 A1 offenbart gleiche Beläge, die verdrehsicher so ausgestaltet sind, dass sie nur korrekt ausgerichtet in einen Bremsträger eingebaut werden können. Offenbart wird eine Scheibenbremse, insbesondere Schiebesattelscheibenbremse, mindestens aufweisend einen ortsfest fixierten Bremsträger, der zwei Paar Trägerhörner aufweist, durch die ein reaktionsseitiger Bremsbelag und ein zuspannseitiger Bremsbelag gehalten werden, einen Bremssattel, der einen Bremssattelrücken und einen Zuspannabschnitt umfasst, wobei der Bremssattelrücken an seinen Enden jeweils mit einer Zugstrebe versehen ist, sowie eine Zuspannmechanik, wobei der reaktionsseitige Bremsbelag und der zuspannseitiger Bremsbelag und die zwei Paar Trägerhörner jeweils untereinander an Abstützflächen aneinander liegen.

Es ist demgegenüber wünschenswert - insbesondere auch im Hinblick auf die Nutzlastoptimierung eines Nutzfahrzeuges - einen gewichts- und damit auch kostenoptimierten Bremsträger bzw. einen gewichts- und damit auch kostenoptimierten Bremssattel insbesondere für Nutzfahrzeugbremsen bereitzustellen, der die vorgenannten Nachteile überwindet.

Der Erfindung liegt daher die Aufgabe zu Grunde, eine verbesserte Scheibenbremse mit einem gewichts- und damit auch kostenoptimierten Bremsträger bzw. einen gewichts- und damit auch kostenoptimierten Bremssattel zu schaffen.

Die Erfindung löst diese Aufgabe durch den Gegenstand des Anspruchs 1.

Eine erfindungsgemäße Scheibenbremse, insbesondere Schiebesattelscheibenbremse, umfasst mindestens einen ortsfest fixierten Bremsträger, der zwei Paar Trägerhörner aufweist, durch die ein reaktionsseitiger Bremsbelag und ein zuspannseitiger Bremsbelag gehalten werden, einen Bremssattel, der durch Zugstreben sowie einen Bremssattelrücken gebildet wird, sowie eine Zuspannmechanik. Der reaktionsseitige Bremsbelag und der zuspannseitiger Bremsbelag und die zwei Paar Trägerhörner liegen jeweils untereinander an Abstützflächen aneinander. Der Abstand der Trägerhörner zueinander, die den reaktionsseitigen Bremsbelag aufnehmen, ist größer, als der Abstand der Trägerhörner zueinander, die den zuspannseitigen Bremsbelag aufnehmen. Es sind ferner die Trägerhörner auf einer Reaktionsseite des Bremsträgers kürzer ausgeführt sind als auf einer Zuspannseite des Bremsträgers. Durch die Verkürzung der Trägerhörner ergibt sich eine geringeres Biegemoment, das beim Bremsen auf den Fuß eines Trägerhorns wirkt, so dass das jeweilige verkürzte Trägerhorn eine vergleichsweise geringere Verformung bzw. mechanische Spannung als beim Stand der Technik aufweist. Da der reaktionsseitige Bremsbelag und der zuspannseitiger Bremsbelag und die zwei Paar Trägerhörner jeweils untereinander an Abstützflächen aneinander liegen, sind eine eindeutige Führung und auch eine verwechslungsfreie Montage möglich.

Ein Bremsbelagsatz einer oben beschriebenen und beanspruchten Scheibenbremse weist einen ersten Bremsbelag und einen zweiten Bremsbelag auf. Der erste Bremsbelag weist eine Breite auf, die größer ist als eine Breite des zweiten Bremsbelags. Dies ermöglicht einerseits eine verwechslungsfreie Montage. Andererseits kann ein resultierendes Kippmoment auf den Bremssattelrücken reduziert werden. Ebenfalls kann die Standzeit beider Bremsbeläge derart beeinflusst werden, dass eine gleichmäßige Abnutzung erfolgt.

Durch einen breiteren Bremsbelagschacht auf einer Reaktionsseite des Bremsträgers kann vorteilhafterweise das Volumen des reaktionsseitigen Bremsbelages größer ausgeführt werden als das Volumen des zuspannseitigen Bremsbelages. Dadurch ergeben sich weitere Vorteile wie z.B. eine verbesserte Wärmeabfuhr in Richtung des Bremssattelrückens, so dass die Zuspannmechanik der Scheibenbremse und insbesondere deren Dichtungen geschont werden. Darüber hinaus wird das resultierende Kippmoment, das auf den Bremssattel beim Bremsvorgang wirkt, verringert, da der Druckpunkt des reaktionsseitigen Bremsbelages vorteilhaft verändert wird.

In einer weiteren Ausführung ist das Volumen des reaktionsseitigen Bremsbelages größer ist als ein Volumen des zuspannseitigen Bremsbelages. Durch die Reduzierung der Belagdicke des reaktionsseitigen Bremsbelages ergibt sich die Möglichkeit der Reduzierung eines Bauraums auf der Reaktionsseite des Bremssattels, der zur gezielten Aussteifung des Bremssattelrückens und der Zugstreben des Bremssattels ausgefüllt werden kann.

Sofern die Dicke des reaktionsseitigen Bremsbelages beibehalten wird, ergibt sich eine höhere Leistungsfähigkeit bzw. Standzeit des reaktionsseitigen Bremsbelages. Dies ist wünschenswert, da der reaktionsseitige Bremsbelag im Betrieb der Scheibenbremse auf Grund seiner Lage und der damit einhergehenden Exponiertheit für Verschmutzung üblicherweise schneller verschleißt als der zuspannseitige Bremsbelag. Darüber hinaus nimmt der vergrößerte reaktionsseitige Bremsbelag mehr Wärme auf, so dass sich die spezifische Wärmeabgabe des reaktionsseitigen Bremsbelags ebenfalls erhöht und entsprechend mehr Wärme in den Bremssattelrücken abgeleitet werden kann. Dies schont die Zuspannmechanik, insbesondere deren Dichtungen.

In einer noch weiteren Ausführung ist vorgesehen, dass Verbindungsstellen zwischen den Zugstreben und dem Bremssattelrücken mit einem Korbbogen bzw. einem Ellipsenabschnitt verrundet sind. Durch diese geometrische Maßnahmen wird außerdem ein Spannungsniveau entsprechend abgesenkt, was sich in vorteilhafterweise in der Gewichtsbilanz des Bremssattels auswirkt. Dazu können in einer weiteren Ausführung die Zugstreben jeweils eine optimierte Geometrie aufweisen, die sich zum Bremssattelrücken hin verjüngt und schließlich in den Korbbogen bzw. in den Ellipsenabschnitt einmündet.

In einer Ausführung bildet die optimierte Geometrie mit den Korbbögen an den Seiten eine Art ellipsenförmiger Öffnung des Bremssattelrückens des Bremssattels, wobei eine zuspannseitige Längsseite der Öffnung des Bremssattelrückens kürzer ist als eine reaktionsseitige Längsseite der Öffnung des Bremssattelrückens. Dies ergibt eine vorteilhaft einfache verwechslungsfreie Montage der Bremsbeläge bei Wartung bzw. Neueinbau. Die Geometrie der Öffnung verhindert den Einbau des breiteren Bremsbelags an der Stelle des kürzeren und gibt somit den richtigen Einbauort vor.

Ein resultierendes Kippmoment, das bei einem Bremsvorgang auf den Bremssattelrücken wirkt, kann durch die Geometrie des reaktionsseitigen Bremsbelags reduziert werden. Auch dies kann eine Baugröße positiv beeinflussen.

In einer Ausführung sind der Bremsträger und der Bremssattel durch ein Gießverfahren hergestellt. Dabei kann für den Bremsträger und den Bremssattel ein duktiler Gusswerkstoff verwendet werden. Auch ein Gusseisen mit Kugelgraphit ist möglich. Denkbar sind natürlich auch Kombinationen aus diesen verschiedenen Werkstoffen.

Ein erfindungsgemäßer Bremsbelagsatz für eine bzw. einer oben beschriebenen und beanspruchten Scheibenbremse weist einen ersten Bremsbelag und einen zweiten Bremsbelag auf. Der erste Bremsbelag weist eine Breite auf, die größer ist als eine Breite des zweiten Bremsbelags. Dies ermöglicht einerseits eine verwechslungsfreie Montage. Andererseits kann ein resultierendes Kippmoment auf den Bremssattelrücken reduziert werden. Ebenfalls kann die Standzeit beider Bremsbeläge derart beeinflusst werden, dass eine gleichmäßige Abnutzung erfolgt.

In einer Ausführung weist der erste Bremsbelag ein Volumen auf, das größer ist als ein Volumen des zweiten Bremsbelags. Damit kann eine Wärmeaufnahme bei unterschiedlicher Wärmeerzeugung beeinflusst werden.

Weiterhin ist der erste Bremsbelag als ein reaktionsseitiger Bremsbelag für die zuzuordnende Scheibenbremse vorgesehen, und der zweite Bremsbelag ist als ein zuspannseitiger Bremsbelag für die zuzuordnende Scheibenbremse vorgesehen. So können die unterschiedlichen Geometrien der Bremsbeläge für eine gleichmäßige Kraftverteilung dienen.

Weitere vorteilhafte Ausführungen des erfindungsgemäßen Bremsträgers sind den Unteransprüchen zu entnehmen.

Ausführungsbeispiele einer Scheibenbremse und eines Bremsträgers sind in den Zeichnungen dargestellt und werden im Folgenden näher beschrieben, wobei auch weitere Vorteile erfindungsgemäßer Ausführungen erläutert werden. Es zeigen:
- Fig. 1: eine räumliche Ansicht einer Scheibenbremse nach dem Stand der Technik;
- Fig. 2-2a: Darstellungen eines Bremsträgers nach dem Stand der Technik;
- Fig. 3: eine räumliche Ansicht eines erfindungsgemäßen Bremsträgers;
- Fig. 4: eine Vorderansicht des erfindungsgemäßen Bremsträgers nach Fig. 3;
- Fig. 5: eine Seitenansicht des erfindungsgemäßen Bremsträgers nach Fig. 3;
- Fig. 6: eine räumliche Ansicht einer erfindungsgemäßen Scheibenbremse;
- Fig. 7: eine Seitenansicht der erfindungsgemäßen Scheibenbremse nach Fig. 6; und
- Fig. 8: eine Draufsicht der erfindungsgemäßen Scheibenbremse nach Fig. 6,

Nachfolgend werden Begriffe wie "oben", "unten", "rechts", "links" usw. verwendet, welche sich auf Ausrichtungen in den Figuren beziehen. Der Buchstabenindex "R" bezieht sich auf eine Reaktionsseite R einer Scheibenbremse, wobei sich der Buchstabenindex "Z" auf eine Zuspannseite einer Scheibenbremse bezieht. Koordinaten x, y, z in den Figuren dienen der weiteren Orientierung.

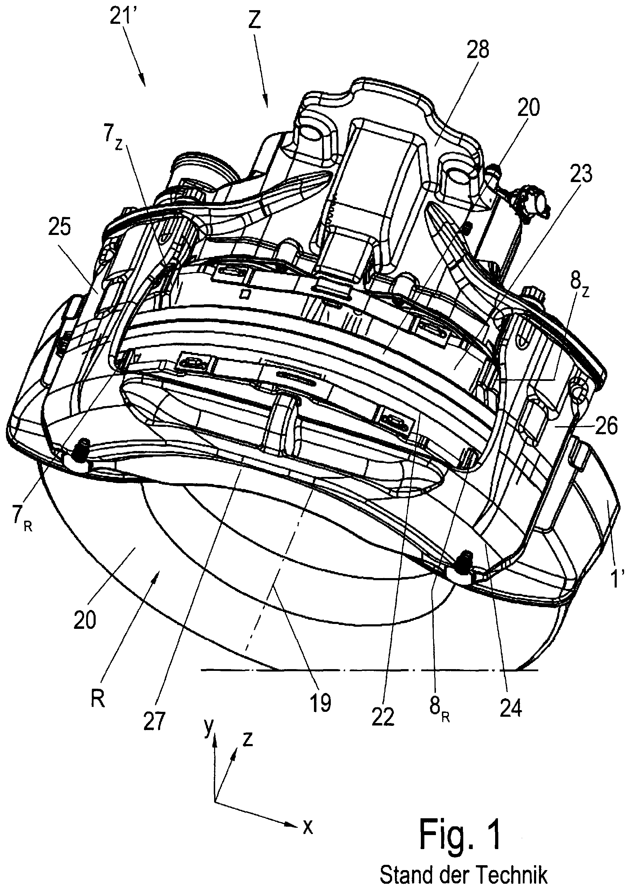

Fig. 1 zeigt eine räumliche Ansicht einer Scheibenbremse 21' nach dem Stand der Technik.

Die Scheibenbremse 21' ist z.B. einem Fahrzeug, insbesondere Nutzfahrzeug, zugeordnet und umfasst einen Bremsträger 1', einen Bremssattel 24 und zumindest zwei Bremsbeläge 22, 23.

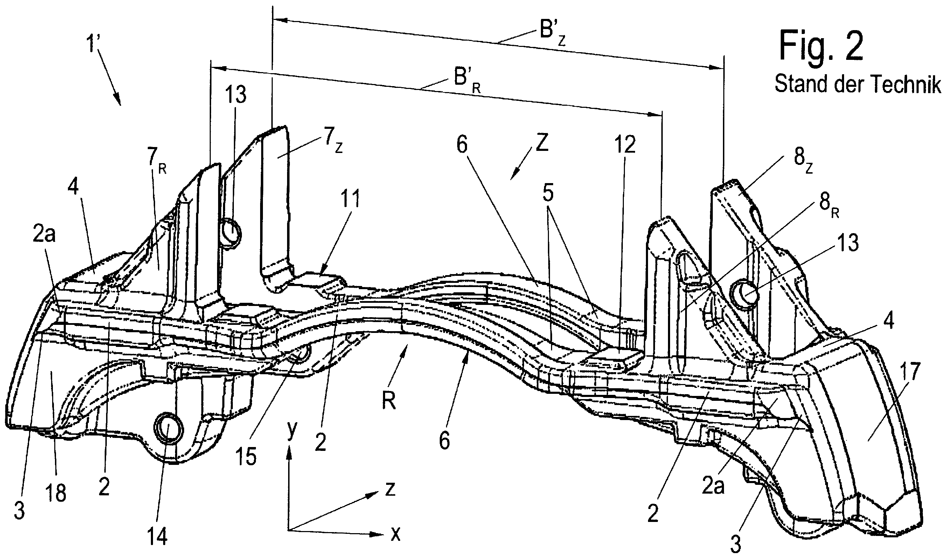

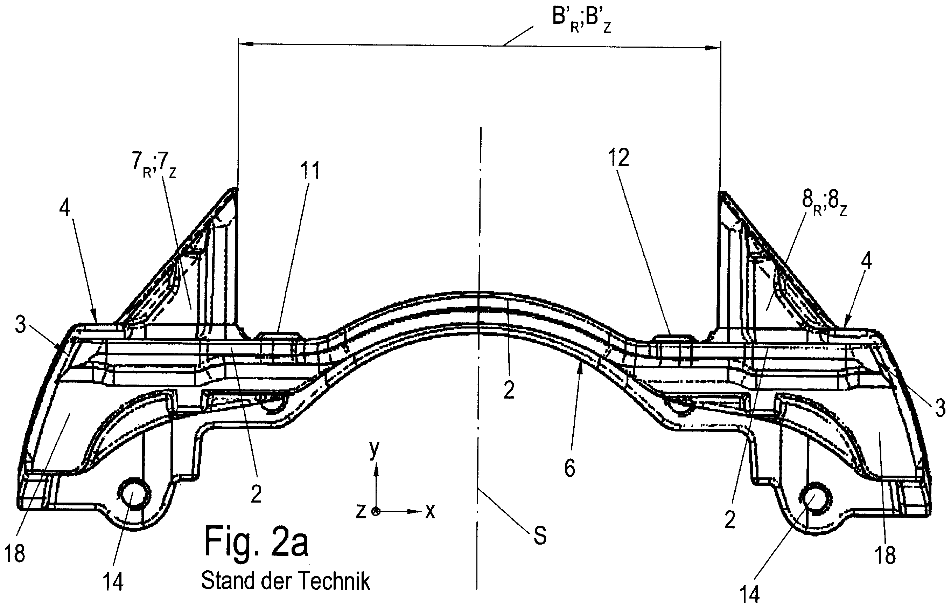

Der Bremsträger 1' ist ortsfest fixiert, was nicht näher erläutert wird. Er überspannt bzw. umgreift rahmenartig einen in Bezug auf eine Bremsscheibendrehachse 19, die gleichzeitig eine Fahrzeugradachse ist und sich in z-Richtung erstreckt, axial äußeren Abschnitt einer drehfest mit der drehbaren Fahrzeugradachse verbundenen Bremsscheibe 20. Beiderseits der Bremsscheibe 20 ist der Bremsträger 1' mit Trägerhörnern 7_{R}, 7_{Z} und 8_{R}, 8_{Z} versehen, die sich in y-Richtung erstrecken und zur Abstützung der beiden Bremsbeläge 22, 23 dienen. Im Zusammenhang mit den Figuren 2 und 2a wird der Bremsträger 1' noch ausführlich beschrieben.

Der Bremssattel 24 ist hier als Schiebesattel ausgebildet, so kann die Scheibenbremse 21' auch als Schiebesattelscheibenbremse bezeichnet werden. Der Bremssattel 24 umfasst einen Bremssattelrücken 27 und einen Zuspannabschnitt 28. Der Bremssattelrücken 27 ist an seinen Enden jeweils mit einer Zugstrebe 25, 26 versehen. Der Zuspannabschnitt 28 ist mit dem Bremssattelrücken 27 über die Zugstreben 25, 26 verbunden, hier z.B. mittels Schrauben. Der Bremssattelrücken 27 und der Zuspannabschnitt 28 sind jeweils auf einer Seite der Bremsscheibe 20 parallel zu dieser angeordnet, wobei sich die Zugstreben 25, 26 parallel zur Bremsscheibendrehachse 19 über den Abschnitt der Bremsscheibe 20 erstrecken, der von dem Bremssattel 24 und dem Bremsträger 1' übergriffen bzw. überspannt ist.

Der Zuspannabschnitt 28 des Bremssattels 24 nimmt eine Zuspannmechanik der Scheibenbremse 21' auf. Die Zuspannmechanik dient zur Betätigung der Scheibenbremse 21' und kann z.B. ein Bremsdrehhebel mit einem Druckluftzylinder sein. Auf sie wird hier nicht weiter eingegangen.

Die Seite der Scheibenbremse 21', auf welcher der Zuspannabschnitt 28 des Bremssattels 24 mit der Zuspannmechanik angeordnet ist, wird im Weiteren als Zuspannseite Z bezeichnet. Die andere Seite der Scheibenbremse 21', auf welcher der Bremssattelrücken 27 vorgesehen ist, wird als Reaktionsseite R im Folgenden bezeichnet. Diese Begriffe "Zuspannseite" und "Reaktionsseite" und weitere sich darauf beziehende Bezeichnungen sind üblich und dienen zu einer besseren Orientierung.

So wird der Bremsbelag 22, der sich auf der Reaktionsseite R befindet, reaktionsseitiger Bremsbelag 22 bezeichnet, und der diesem gegenüberliegende wird zuspannseitiger Bremsbelag 23 genannt.

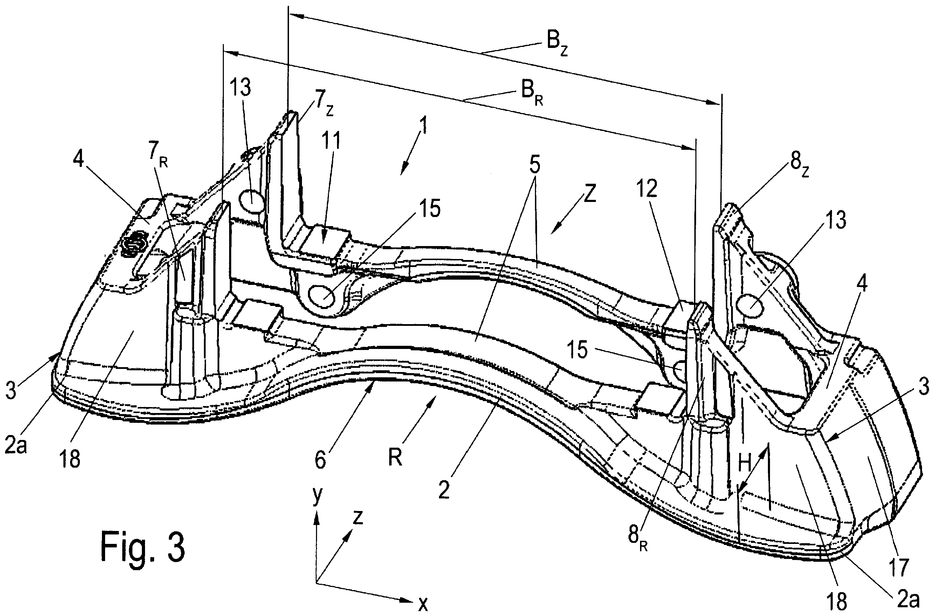

In Fig. 2 ist der Bremsträger 1' nach dem Stand der Technik räumlich dargestellt. Dazu zeigt Fig. 2a eine Vorderansicht. Bis auf eine Rippe ist die nachfolgende Beschreibung auch auf den erfindungsgemäßen Bremsträger 1 (siehe Fig. 3 bis 5) übertragbar.

In den Figuren 2 bis 5 sind die Bremsscheibe 20 und weitere Bremsenbauteile der Übersicht halber nicht dargestellt. Bei Bezugnahmen auf diese wird auf Fig. 1 verwiesen. Zur weiteren Orientierung sind die Zuspannseite Z und Reaktionsseite R angegeben.

Der Bremsträger 1 überspannt bzw. umgreift rahmenartig als Scheibenrahmen bzw. als Scheibenumgriff 5 den axial äußeren Abschnitt der Bremsscheibe 20. Der Scheibenumgriff 5 umfasst zwei zueinander und zu der Bremsscheibe 20 parallel angeordnete Nabenschwünge 6, welche an ihren Enden durch zwei zu den Nabenschwüngen 6 rechtwinklig verlaufende Rahmenteile 17 verbunden sind.

Die beiden Nabenschwünge 6 sind bogenförmig ausgebildet. Der eine der Nabenschwünge 6 liegt auf der Zuspannseite Z des Bremsträgers 1' (in Fig. 1 die hintere Seite), so dass er an der Fahrzeugachse befestigt und somit stabilisiert wird.

Der Bremsträger 1' weist ferner auf jeder Seite der Bremsscheibe 20 die zwei in den Scheibenumgriff 5 integrierten, von den Rahmenteilen 17 im Bereich einer (definitionsgemäß nachfolgend als Grundfläche 4 bezeichneten) Fläche bzw. Ebene 4 nach oben in y-Richtung vorkragenden sowie hier symmetrisch zu jeweils einem der Nabenschwünge 6 angeordneten und in einer x-y-Ebene parallel zur Bremsfläche der Bremsscheibe 20 in Umfangrichtung jeweils zwei hintereinander angeordneten Trägerhörner 7_{R}, 7_{Z} und 8_{R}, 8_{Z} auf, die zur Abstützung der beiden Bremsbeläge 22, 23 dienen.

Die Trägerhörner 7_{R}, 7_{Z} und 8_{R}, 8_{Z} bilden jeweils mit unteren Stützstellen 11, 12 des Bremsträgers 1' jeweils einen von zwei Bremsbelagschächten aus, die jeweils eine Belagträgerplatte eines Bremsbelags 22, 23 (nicht dargestellt) in Umfangsrichtung, d.h. einlaufseitig und auslaufseitig (in Bezug auf die bevorzugte Drehrichtung der Bremsscheibe 20 um die Bremsscheibendrehachse 19) sowie nach unten hin abstützen. So sind die Trägerhörner 7_{R} und 8_{R} dem Bremsbelagschacht des reaktionsseitigen Bremsbelags 22 und die Trägerhörner 7_{Z} und 8_{Z} dem Bremsbelagschacht des zuspannseitigen Bremsbelags 23 zugeordnet. Dabei wird ein innerer Abstand der Trägerhörner 7_{R} und 8_{R} als Breite B'_{R} des reaktionsseitigen Bremsbelagschachts und ein innerer Abstand der Trägerhörner 7_{Z} und 8_{Z} als Breite B'_{Z} des zuspannseitigen Bremsbelagschachts bezeichnet. Die Breiten B'_{R} und B'_{Z} erstrecken sich in x-Richtung und weisen einen gleichen Längenwert auf. Mit anderen Worten, die Breiten B'_{R} und B'_{Z} erstrecken sich in tangentialer Richtung zu der Bremsscheibe 20.

Das in Bezug auf die Bremsscheibendrehachse 19 in z-Richtung angeordnete Rahmenteil 17 des Scheibenumgriffs 5 erstreckt sich (hier kurvenförmig) in negativer y-Richtung, so dass sich ausgehend vom Nabenschwung 6 jeweils bis zu einem Außenrand 3 der Reaktionsseite R des Bremsträgers 1' ein Abschnitt mit einer im Wesentlichen dreieckförmigen Geometrie/Dreieck 18 insbesondere auf dieser Reaktionsseite R des Bremsträgers 1' ergibt.

Dabei bildet der Rahmenteil 17 bzw. der Außenrand 3 die kürzeste Seite eines gedachten Dreiecks 18. Ein Konturzug einer Verstärkungsrippe 2 liegt im Bereich der dreieckförmigen Geometrie 18 - bezogen auf das Koordinatensystem - im Bereich betragsmäßig größerer y-Werte in positiver y-Richtung (Pfeilspitze).

Jeweils ein Bremsbelag 22, 23 stützt sich in y-Richtung auf jeweils zwei Stützstellen 11, 12 auf dem Bremsträger 1 ab, die gleichzeitig den Abstand des jeweiligen Bremsbelags 22, 23 zur Bremsscheibendrehachse 19 definieren. Zur Befestigung des Bremsträgers 1' an einem Befestigungsflansch (nicht dargestellt) an der Fahrzeugachse weist der Bremsträger 1' zuspannseitig Befestigungsstellen 14, 15 auf, über die der Bremsträger 1' mit dem Befestigungsflansch verschraubt ist.

An Befestigungsstellen 13 werden Lagerbolzen für den Schiebesattel (Bremssattel 24) befestigt (hier nicht dargestellt). Dies ist dem Fachmann an sich bekannt und wird daher hier nicht näher beschrieben.

Der Bremsträger 1' nach dem Stand der Technik (Fig. 2, 2a) ist ein in Bezug auf eine in y-Richtung verlaufende Symmetrieachse S (Fig. 2a) vorzugsweise symmetrisches Bauteil. Er weist zur Stabilisierung die Verstärkungsrippe 2 auf der reaktionsseitigen Außenseite auf (die sich in x-Richtung rechtwinklig zur Bremsscheibendrehachse 19 und somit tangential zur Bremsscheibe 20 erstreckt). Die Verstärkungsrippe 2 weist einen über die gesamte Fläche des reaktionsseitigen Abschnitts des Bremsträgers 1' den durchgehenden Konturzug auf.

Der Konturzug der Verstärkungsrippe 2 beginnt links (oder auch rechts) (siehe Fig. 2) an einem Ende 2a auf der Reaktionsseite R an einem Außenrand 3 des Bremsträgers 1' und verläuft zunächst parallel unter der oder auf gleicher Ebene der konsolenartigen Grundfläche 4 des Scheibenumgriffs 5 zur Mitte hin bis zum Beginn des Nabenschwungs 6. Dann folgt der Konturverlauf der Verstärkungsrippe 2 dem Nabenschwung 6 an dessen Außenseite (d.h. an der von der Bremsscheibe 20 abgewandten Außenseite) bis zur mittigen Symmetrieachse S (Fig. 2a). Die Verstärkungsrippe 2 folgt dann von dort nach rechts dem Nabenschwung 6 bis zum rechten Ende 2a spiegelsymmetrisch zur Symmetrieachse S (Fig. 2).

Durch den Konturverlauf der Verstärkungsrippe 2 - an den reaktionsseitigen Außenrändern 3 des Bremsträgers 1 im Wesentlichen parallel zur konsolenartigen Grundfläche 4 des Scheibenumgriffs 5 - ergeben sich bei Bremsvorgängen insbesondere im Bereich der Trägerhörner 7_{R}, 7_{Z} und 8_{R}, 8_{Z} für die Bremsbeläge 22, 23 (nicht dargestellt) Spannungsspitzen, die aus dem Steifigkeitssprung des Bremsträgers 1 jeweils unterhalb und oberhalb der Verstärkungsrippe 2 herrühren.

Begegnet wird diesen Spannungsspitzen z.B. durch entsprechende Wandstärkeaufdickungen an der Verstärkungsrippe 2 z.B. im Bereich der Trägerhörner 7_{R}, 7_{Z} und 8_{R}, 8_{Z}.

Bei Bremsvorgängen treten Belastungen des Bremsträgers 1' auf, die zu einer parallelogrammartigen Verformung der Grundflächen 4 des Scheibenumgriffs 5 führen. Die Verstärkungsrippe 2 trägt jedoch auf Grund ihrer Geometrie und ihres Konturzuges nicht wesentlich zur Aussteifung des Bremsträgers 1' im Bereich der reaktionsseitigen Seiten des Rahmenteils 17, welche die dreieckförmige Geometrie 18 aufweisen, bei, so dass in einem solchen Belastungsfall die Spannungskonzentration im Bremsträger 1 ebenfalls erhöht ist. Unter der dreieckförmigen Geometrie 18 ist jeweils ein gedachtes Dreieck in der x-y-Ebene zu verstehen, dessen obere Seite in x-Richtung verläuft und den geraden Teil der Verstärkungsrippe 2 bildet. Die Enden dieser Seite sind das Ende 2a und der Beginn des Nabenschwungs 6. Eine weitere Seite bildet der Außenrand 3, beginnend an dem Ende 2a und endend an einem unteren Ende dieses Außenrands 3. Die dritte Seite des gedachten Dreiecks der dreieckförmigen Geometrie 18 verbindet dieses untere Ende des Außenrands 3 mit dem Beginn des Nabenschwungs 6. Diese dreieckförmige Geometrie 18 ist auf beiden Seiten des Bremsträgers 1' vorhanden (siehe auch Fig. 2a).

Im Hinblick auf eine Optimierung mechanischer Spannungen, Verformungen und eines Gewichts des Bremsträgers 1' scheiden einfache Maßnahmen zur Aussteifung des Bremsträgers 1', wie z.B. das Hinzufügen von zusätzlichem Werkstoff, auf Grund der Bauraumverhältnisse auf der Reaktionsseite des Bremsträgers 1' aus.

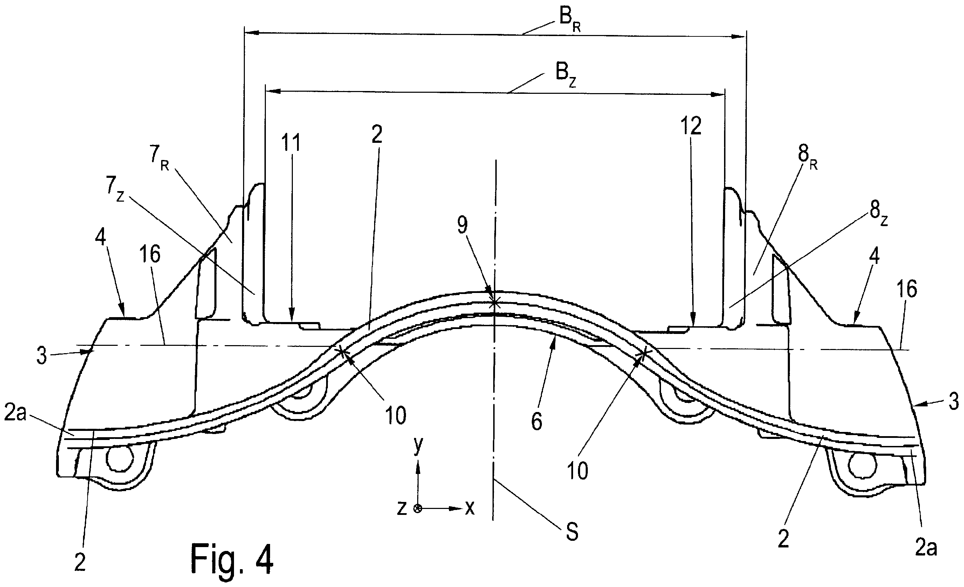

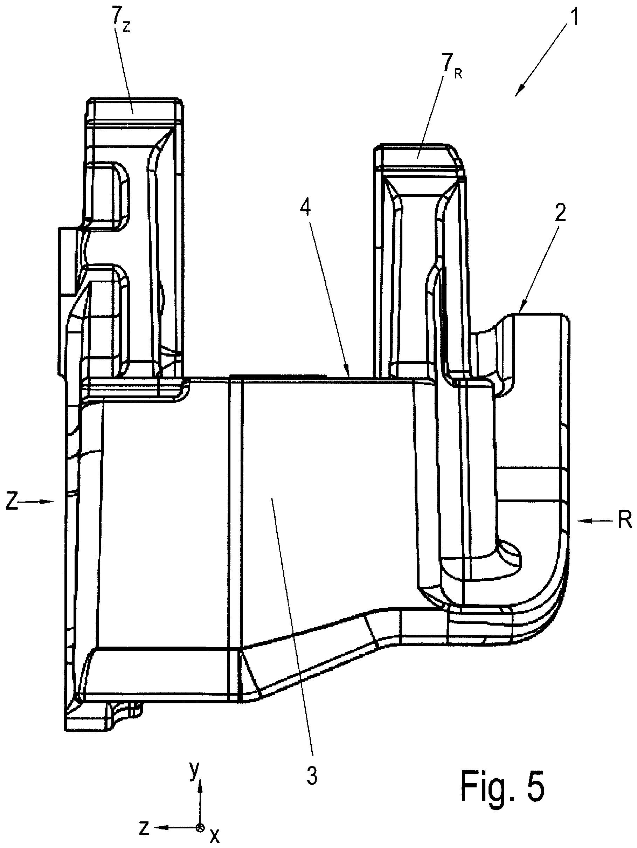

In den Figuren 3, 4 und 5 ist ein erfindungsgemäßer Bremsträger 1 dargestellt. Dabei zeigt Fig. 3 eine räumliche Ansicht. In Fig. 4 ist eine Vorderansicht des Bremsträgers 1 dargestellt, und Fig. 5 zeigt eine Seitenansicht.

Die Grundgeometrie des erfindungsgemäßen Bremsträgers 1 entspricht im Wesentlichen der des Bremsträgers 1' nach dem Stand der Technik (Fig. 2, 2a). Ein Unterschied des erfindungsgemäßen Bremsträgers 1 zu dem Bremsträger 1' nach dem Stand der Technik besteht in der Geometrie des Konturverlaufs der Verstärkungsrippe 2 sowie in der Lageanordnung der Verstärkungsrippe 2 auf der Reaktionsseite R des Bremsträgers 1.

Die Verstärkungsrippe 2 auf der Reaktionsseite R ist zunächst wiederum zur Symmetrieachse S spiegelsymmetrisch ausgebildet.

Der Beginn des Konturzugs der Verstärkungsrippe 2 mit dem Ende 2a liegt im Gegensatz zu dem Bremsträger 1' nach dem Stand der Technik (Fig. 2, 2a) jeweils unterhalb einer Linie 16 (Fig. 4), die eine Referenz aus dem Stand der Technik angibt, jeweils in der unteren Ecke des Außenrandes 3 des Bremsträgers 1, also in Bezug auf die Linie 16 im Bereich betragsmäßig kleinerer y-Werte als beim herkömmlichen Bremsträger 1'. Dies ist in Fig. 4 verdeutlicht.

Anders ausgedrückt weist die Verstärkungsrippe 2 zwei voneinander abgewandte Enden 2a auf, welche vorteilhaft sowie vorzugsweise jeweils an den äußeren unteren Ecken des Außenrands 3 des Bremsträgers 1 ausgebildet sind, wobei sich die Verstärkungsrippe 2 ausgehend von diesen Enden 2a jeweils bis zu einem zentralen Scheitelpunkt 9 (Fig. 4) an der Symmetrieachse S des Bremsträgers 1 erstreckt. An dem Scheitelpunkt 9 ändert sich das Vorzeichen eines Steigungsgradienten des Konturzuges der Verstärkungsrippe 2. Diese Anordnung trägt zur Verringerung von Spannungsspitzen bei Belastungen in dem Bremsträger 1 bei.

Bevorzugt beginnt somit der Konturzug der Verstärkungsrippe 2 entsprechend in der unteren Hälfte - insbesondere ganz am unteren Rand wie oben beschrieben - der dreieckförmigen Geometrie 18, die dadurch gebildet wird, dass sich der Scheibenumgriff 5 an den Außenrändern 3 des Bremsträgers 1 in Richtung kleinerer y-Werte in Bezug auf das Koordinatensystem und in Bezug auf die Grundfläche 4 in Fig. 3. erweitert, wobei der Scheibenumgriff 5 in seiner Ausdehnung in Richtung kleinerer y-Werte etwa im Bereich, an dem der Nabenschwung 6 die Ebene der Grundfläche 4 verlässt, die Grundfläche 4 erreicht. Mit anderen Worten, die dreieckförmigen Geometrie 18 ist auch hier jeweils ein gedachtes Dreieck in der x-y-Ebene. Die obere Seite dieses gedachten Dreiecks verläuft in x-Richtung, wobei sie als eine Gerade auf der Höhe der Grundfläche 4 mit einem Endpunkt am Beginn des Außenrands 3 und einem Endpunkt in einem gedachten Schnittpunkt mit der Verstärkungsrippe 2 im Scheibenumgriff 5 verläuft. Eine weitere Seite bildet der Außenrand 3, beginnend oben an dem Ende der Geraden auf der Höhe der Grundfläche 4 und endend an dem unteren Ende dieses Außenrands 3 in dem Ende 2a der Verstärkungsrippe 2. Die dritte Seite des gedachten Dreiecks der dreieckförmigen Geometrie 18 verbindet das Ende 2a der Verstärkungsrippe 2 mit dem gedachten Schnittpunkt mit der Verstärkungsrippe 2 im Scheibenumgriff 5.

Die Verstärkungsrippe 2 des erfindungsgemäßen Bremsträgers 1 erinnert in ihrem Konturverlauf an den Graphen der Gaußschen Normalverteilungsfunktion (Gaußsche "Glockenkurve").

Es handelt sich dabei also um einen Konturzug mit zur mittigen Symmetrieachse S jeweils von außen zur Mitte hin vorzugsweise stetig steigendem Verlauf mit einem mittigen Scheitelpunkt 9.

Vorzugsweise weist der Bremsträger 1 ferner zwei symmetrisch zur Symmetrieachse S befindliche Wendepunkte 10 auf, an denen sich jeweils das Vorzeichen eines Krümmungsgradienten des Konturzugs der Verstärkungsrippe 2 ändert.

Der Scheitelpunkt 9 des Konturzugs der Verstärkungsrippe 2 fällt mittig mit dem Scheitelpunkt des Nabenschwunges 6 zusammen. Darüber hinaus weist der Konturzug zwei symmetrisch zur Symmetrieachse S befindliche Wendepunkte 10 auf, an denen sich das Vorzeichen des Krümmungsgradienten des Konturzugs ändert.

Die äußeren Startpunkte bzw. Enden 2a der Verstärkungsrippe 2 des erfindungsgemäßen Bremsträgers 1 liegen in Bezug auf den Verlauf des Konturzugs im Bereich der dreieckförmigen Geometrie 18 um beispielsweise mindestens 15 mm, vorzugsweise um weniger als 25 mm, unterhalb der Grundfläche 4 des Scheibenumgriffs 5. Der Konturzug der Verstärkungsrippe 2 verläuft mit positiven Steigungsgradienten vorzugsweise stetig steigend, um dann nach Wechsel des Vorzeichens des Krümmungsgradienten im Wendepunkt 10 dem Nabenschwung 6 bis zu dem zentralen Scheitelpunkt 9, der mit der Symmetrieachse S des Bremsträgers 1 zusammenfällt, zu folgen.

Der Konturverlauf bzw. -zug der Verstärkungsrippe 2 ist jeweils spiegelbildlich zur Symmetrieachse S.

Besonders vorteilhaft ist es, dass der durchgehende Konturzug von den zwei äußeren Enden 2a zu der mittigen Symmetrieachse S hin einen jeweils vorzugsweise stetig steigenden Verlauf aufweist.

Dabei liegen vorzugsweise die zwei Enden 2a der Versteifungsrippe 2 jeweils an äußeren unteren Ecken des Bremsträgers 1. Die Verstärkungsrippe 2 erstreckt sich ausgehend von diesen Enden 2a jeweils bis zu dem zentralen Scheitelpunkt 9 an der Symmetrieachse S des Bremsträgers 1, an dem sich das Vorzeichen des Steigungsgradienten des Konturzuges ändert.

Die Verstärkungsrippe 2 ist in Bezug auf die Bremsscheibe 20 in Richtung der Bremsscheibendrehachse 19, d.h. in z-Richtung, wiederum erhaben auf der Reaktionsseite R des Bremsträgers 1 angeordnet. Der Begriff "erhaben" bezieht sich hier auf eine Ausdehnung H in negativer z-Richtung.
Dabei weist die Verstärkungsrippe 2 die sich in negativer z-Richtung erstreckende Ausdehnung H über den gesamten Konturzug der Verstärkungsrippe 2 auf, wobei die Ausdehnung H beispielsweise mindestens 5 mm, vorzugsweise zwischen 7 und 12 mm, beträgt. Der Querschnitt der Verstärkungsrippe 2 weist somit eine größere Querschnittsfläche auf als die Verstärkungsrippe 2 eines Bremsträgers 1' nach dem Stand der Technik.

Die vergrößerte Querschnittsfläche der Verstärkungsrippe 2 führt in Verbindung mit dem stetig steigenden Verlauf des Konturzugs der Verstärkungsrippe 2 jeweils von außen bis zur Mitte zu einer homogenen, also betragsmäßig verhältnismäßig gleichmäßigen Verformung des Bremsträgers 1 bei Belastung. Daraus resultierend treten in dem Bremsträger 1 bei Belastung keine signifikanten Spannungsspitzen auf.

Vorteilhaft in Hinsicht auf die Vermeidung von Spannungen ist ferner, dass der die Verstärkungsrippe 2 aufweisende Nabenschwung 6 wiederum von der Symmetrieachse S aus nach außen hin jeweils in einen Abschnitt mit sich nach außen hin aufweitender dreieckförmiger Geometrie 18 übergeht, wobei die äußeren Enden 2a der Verstärkungsrippe 2 z.B. mindestens 15 mm, vorzugsweise 20 mm und besonders bevorzugt bis zu 25 mm, unterhalb der Grundfläche 4 des Scheibenumgriffs 5 liegen, auf welcher die Trägerhörner 7_{R}, 7_{Z} und 8_{R}, 8_{Z} aufbauen bzw. an welcher diese ansetzen. Die beiden voneinander abgewandten äußeren Enden 2a der Verstärkungsrippe 2 liegen somit vorteilhaft deutlich tiefer als diejenigen nach dem bekannten Stand der Technik.

Dementsprechend kann - wie bei den Bremsträgern 1' nach dem Stand der Technik erforderlich - auf entsprechende Wandstärkeaufdickungen in den betreffenden Bereichen des Scheibenumgriffs 5 mit Steifigkeitssprüngen und entsprechend hohen Spannungsspitzen verzichtet werden.

Die erfindungsgemäße Gestaltung der Verstärkungsrippe 2 eröffnet also die Möglichkeit - sofern die gleiche Verformung wie bei einem Bremsträger 1' nach dem Stand der Technik zugelassen wird - im Vergleich zu Bremsträgern 1' nach dem Stand der Technik Wandstärken im Bereich der Reaktionsseite R des Bremsträgers 1 gezielt zu reduzieren, da sich auch bei entsprechenden Verformungen keine erhöhten Spannungsspitzen ergeben und es so möglich wird, gezielt Werkstoff an der Reaktionsseite R des Bremsträgers einzusparen, um so einen gewichts- und kostenoptimierten Bremsträger 1 zu erhalten.

Somit kann der erfindungsgemäße Bremsträger 1 mit höheren zyklisch wirkenden Kräften beaufschlagt werden, ohne dabei Lebensdauereinbußen hinnehmen zu müssen. Dadurch ergibt sich eine mögliche höhere Leistung des erfindungsgemäßen Bremsträgers 1 bei einem optimierten Leistungsgewicht.

In Fig. 5 ist die unterschiedliche Höhe der Trägerhörner 7_{R} und 7_{Z} in positiver y-Richtung (gilt natürlich ebenfalls für die Trägerhörner 8_{R} und 8_{Z}) gut erkennbar. Hierauf wird weiter unten noch näher eingegangen.

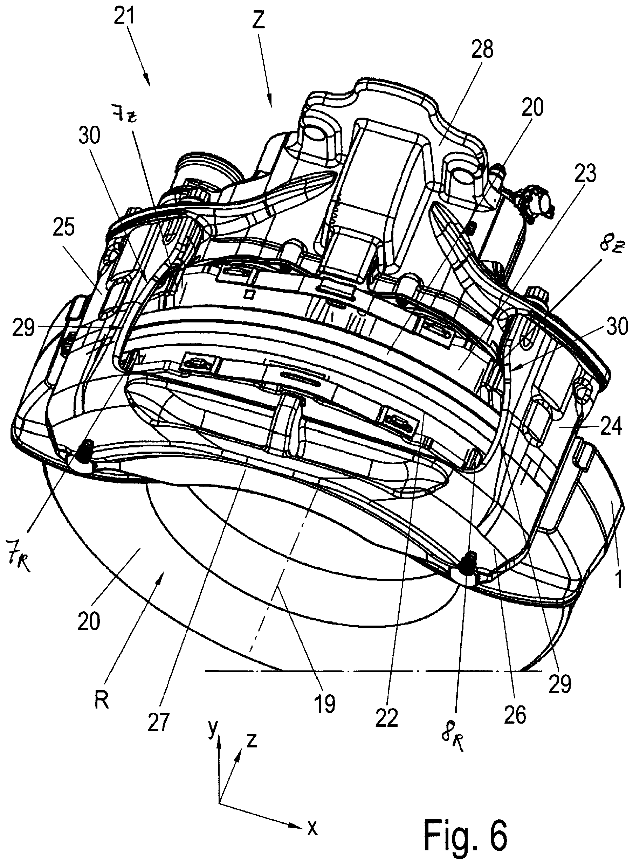

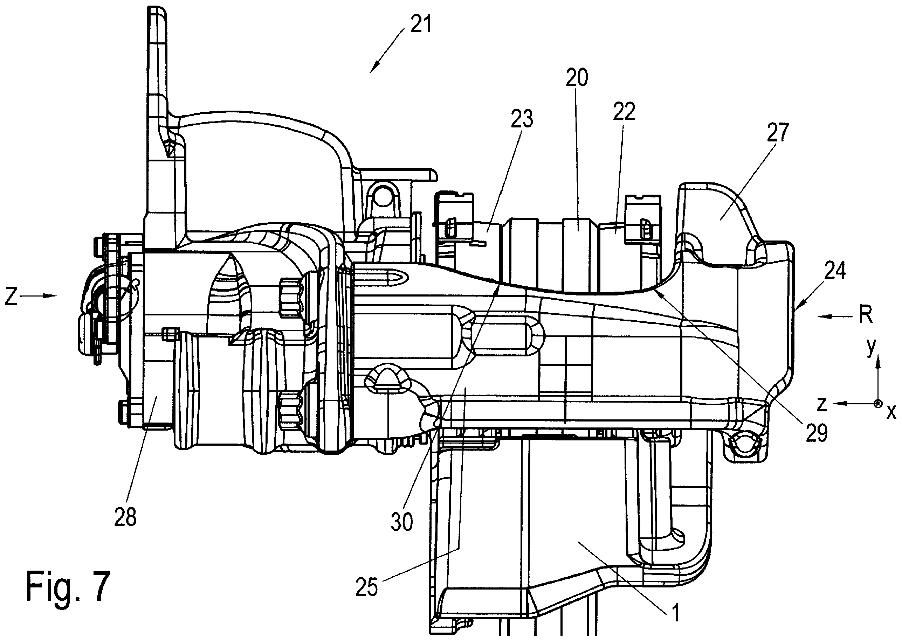

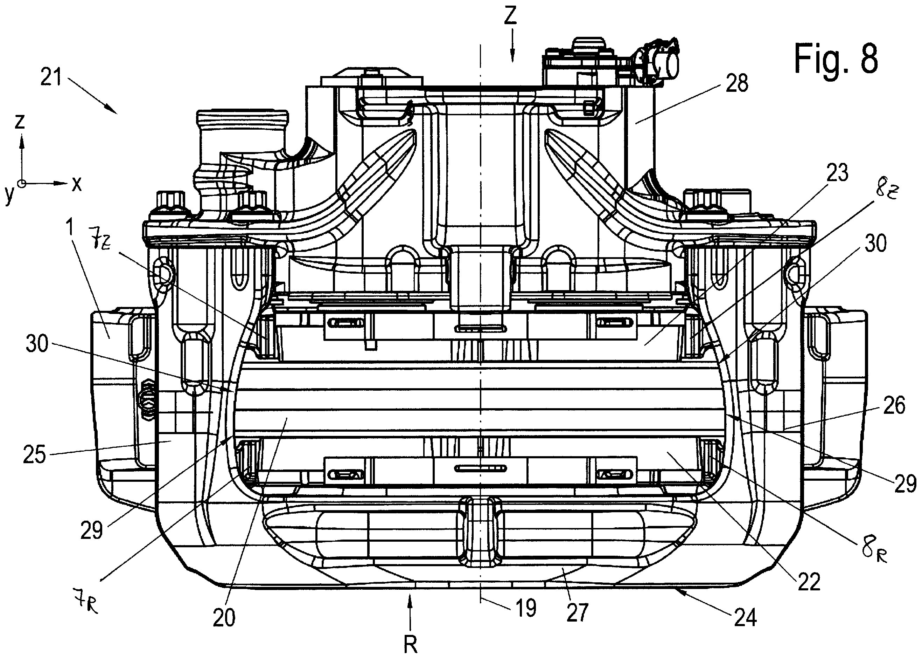

Fig. 6 zeigt eine räumliche Ansicht einer erfindungsgemäßen Scheibenbremse 21. Dazu zeigt Fig. 7 eine Seitenansicht der erfindungsgemäßen Scheibenbremse 21 nach Fig. 6. In Fig. 8 ist eine Draufsicht der erfindungsgemäßen Scheibenbremse 21 nach Fig. 6 dargestellt.

In Fig. 6 ist insbesondere die Querschnittsgeometrie der Reaktionsseite R des Bremssattelrückens 27 gut erkennbar

Im Hinblick auf weitere Bauteile der erfindungsgemäßen Scheibenbremse 21, insbesondere einer Schiebesattelscheibenbremse mit ortsfest fixiertem Bremsträger 1, ergeben sich weitere Optimierungsmöglichkeiten, die im Folgenden näher beschrieben werden.

Der Aufbau der hier in Rede stehenden erfindungsgemäßen Scheibenbremse 21 ist schon oben im Zusammenhang mit Fig. 1 erläutert worden.

Durch die steifere Ausführung des Bremsträgers 1 ergibt sich die Möglichkeit, den Bremsbelag 22 auf der Reaktionsseite R des Bremsträgers 1 bzw. den reaktionsseitigen Bremsbelag 22 breiter auszuführen als den zuspannseitigen Bremsbelag 23 auf der Zuspannseite Z des Bremsträgers 1. Breiter bedeutet in diesem Zusammenhang, dass sich der reaktionsseitige Bremsbelag 22 über einen größeren Abschnitt jeweils in positiver und negativer x-Richtung erstreckt als der zuspannseitige Bremsbelag 23.

Der Begriff "Bremsbelagvolumen" bezieht sich auf den Reibbelag, der sich in x-Richtung, y-Richtung und z-Richtung ausdehnt. Unter dem Begriff "Belagdicke" bzw. "Dicke eines Bremsbelags" ist die Erstreckung des jeweiligen Bremsbelags 22, 23 in z-Richtung zu verstehen.

Unter Voraussetzung eines gleichbleibenden Bremsbelagvolumens können die Trägerhörner 7_{R} und 8_{R} auf der Reaktionsseite R des Bremsträgers 1 kürzer ausgeführt werden, wie es in Fig. 4 und insbesondere in Fig. 5 dargestellt ist. Kürzer bedeutet in diesem Zusammenhang, das sich die Traghörner 7_{R} und 8_{R} auf der Reaktionsseite R des Bremsträgers 1 weniger weit in positiver y-Richtung erstrecken als die Trägerhörner 7_{Z} und 8_{Z} auf der Zuspannseite Z des Bremsträgers 1. Durch die Verkürzung der Trägerhörner 7_{R} und 8_{R} ergibt sich eine geringeres Biegemoment, das beim Bremsen auf den Fuß eines Trägerhorns 7_{R} und 8_{R} wirkt, so dass das jeweilige verkürzte Trägerhorn 7_{R} und 8_{R} eine vergleichsweise geringere Verformung bzw. mechanische Spannung als beim Stand der Technik aufweist. Dies eröffnet die Möglichkeit, die Zugstreben 25, 26 des Bremssattels 21 im Bereich der Trägerhörner 7_{R} und 8_{R} des reaktionsseitigen Bremsbelages 22 entsprechend so zu verstärken, so dass die Verformung der Zugstreben 25, 26 bei Belastung geringer ausfällt.

Durch die Vergrößerung der Breite B_{R} des Bremsbelagschachts für den reaktionsseitigen Bremsbelag 22, die durch den Abstand der Traghörner 7_{R} und 8_{R} in x-Richtung definiert ist (siehe Fig. 3), kann unter Beibehaltung des Bremsbelagvolumens des reaktionsseitigen Bremsbelages 22 die Dicke des reaktionsseitigen Bremsbelages 22 reduziert werden. Durch die Reduzierung der Belagdicke des reaktionsseitigen Bremsbelages 22 ergibt sich die Möglichkeit der Reduzierung der Tiefe des Scheibenumgriffs 5 in Richtung der z-Achse. Einhergehend mit der Reduzierung der Höhe der zugehörigen reaktionsseitigen Traghörner 7_{R} und 8_{R} ergibt sich ein freiwerdender Bauraum auf der Reaktionsseite des Bremssattels 24, der zur gezielten Aussteifung des Bremssattelrückens 27 und der Zugstreben 25, 26 des Bremssattels 24 ausgefüllt wird.

Sofern die Dicke des reaktionsseitigen Bremsbelages 22 beibehalten wird, ergibt sich eine höhere Leistungsfähigkeit bzw. Standzeit des reaktionsseitigen Bremsbelages 22. Dies ist wünschenswert, da der reaktionsseitige Bremsbelag 22 im Betrieb der Scheibenbremse 21 auf Grund seiner Lage und der damit einhergehenden Exponiertheit für Verschmutzung üblicherweise schneller verschleißt als der zuspannseitige Bremsbelag 23. Darüber hinaus nimmt der vergrößerte reaktionsseitige Bremsbelag 22 mehr Wärme auf, so dass sich die spezifische Wärmeabgabe des reaktionsseitigen Bremsbelags 22 ebenfalls erhöht und entsprechend mehr Wärme in den Bremssattelrücken 27 abgeleitet werden kann. Dies schont die Zuspannmechanik, insbesondere deren Dichtungen.

Durch die Verwendung eines hinsichtlich der Belagfläche kleinen zuspannseitigen Bremsbelages 23 und eines größeren reaktionsseitigen Bremsbelages 22 ist der Bremssattel 24 mit einer belastungsgerechten bzw. belastungsoptimierten Geometrie 30 insbesondere an den Verbindungsstellen zwischen den Zugstreben 25, 26 und dem Bremssattelrücken 27 versehen. Insbesondere sind diese Bereiche in der Draufsicht (Fig. 8) mit einem Korbbogen bzw. einem Ellipsenabschnitt 29 verrundet, die vergleichsweise nur geringe Kerbspannungen verursachen und deshalb zur Festigkeitsoptimierung des Bremssattels 24 beitragen.

Darüber hinaus sind die Zugstreben 25, 26 mit einer unter Festigkeitsgesichtspunkten optimierten Geometrie 30 in der Draufsicht (Fig. 6 bzw. Fig. 8) versehen, die sich zum Bremssattelrücken hin verjüngt und schließlich in den Korbbogen 29 zur Verrundung des Übergangs zwischen der Zugstrebe 25, 26 und des Bremssattelrückens 27 einmündet. Weiterhin ist die Geometrie der Zugstreben 25, 26 in der Seitenansicht (Fig. 7) analog zur Geometrie in der Draufsicht ebenfalls belastungsoptimiert gestaltet.

Die optimierte Geometrie 30 mit den Korbbögen 29 an den Seiten trägt mit dazu bei, dass sich eine Art ellipsenförmiger Öffnung des Bremssattels 24 ergibt. Dies ist insbesondere in der Draufsicht in Fig. 8 zu erkennen. Diese Öffnung des Bremssattelrückens 27 des Bremssattels 24 ist an der Längsseite im Bereich des zuspannseitigen Bremsbelags 23 in x-Richtung kürzer als an der gegenüberliegenden Längsseite im Bereich des reaktionsseitigen Bremsbelags 22. Hieraus ergibt sich eine eindeutige Zuordnung der Bremsbeläge 22, 23 beim Einbau bzw. Wechsel. Der in x-Richtung längere reaktionsseitige Bremsbelag 22 kann aufgrund der Gestaltung der Öffnung des Bremssattelrückens 27 des Bremssattels 24 nur auf der Reaktionsseite R eingebaut werden. Ein Einbau auf der Zuspannseite Z ist durch die Geometrie der Öffnung nicht möglich. Damit wird eine verwechslungsfreie Montage der Bremsbeläge 22, 23 geschaffen.

Die Bremsbeläge 22 und 23 und die zugehörigen Trägerhörner 7_{R}, 7_{Z}; 8_{R}, 8_{Z} liegen jeweils an Abstützflächen aneinander, wie leicht zu erkennen ist.

Durch die insgesamt steifere und damit festigkeitsoptimierte Geometrie des Bremssattels 24 sowie des Bremsträgers 1 kann am Bremsträger 1 und am Bremssattel 24 Gewicht eingespart werden. Durch die Gewichtsreduzierung ergeben sich günstigere Herstellkosten sowie eine Reduzierung des Fahrzeuggewichts, was insbesondere im Bereich schwerer Nutzfahrzeuge eine vorteilhafte und deshalb sehr nachgefragte Produkteigenschaft ist.

Durch die optimierte Steifigkeit des Bremssattels 24 kann das Vorhalten von Betätigungsweg durch die Elastizität des Bremssattels 24 reduziert werden. Dies eröffnet die Möglichkeit, auch die Zuspannmechanik und damit die Scheibenbremse 21 insgesamt in z-Richtung gedrungener zu gestalten, so dass insgesamt weniger Bauraum für die erfindungsgemäße Scheibenbremse 21 vorgehalten werden muss. Dies ist im Bereich schwerer Nutzfahrzeuge ebenfalls von großem Vorteil. Durch die Erhöhung der Breite des reaktionsseitigen Bremsbelags 22, d.h. in x-Richtung, also tangential zur Bremsscheibe 20, liegen mehr Flächenanteile des reaktionsseitigen Bremsbelages 22 unterhalb des Druckmittelpunktes der Zuspannmechanik in dem Zuspannabschnitt 28 des Bremssattels 24, wodurch das resultierende Kippmoment auf den Bremssattelrücken 27 reduziert wird.

Die vorteilhafte Geometrie des Bremsträgers 1 bzw. des Bremssattels 24 lässt sich z.B. besonders einfach durch ein Gießverfahren fertigungstechnisch realisieren. Bevorzugt wird der erfindungsgemäße Bremsträger 1 aus einem duktilen Gusswerkstoff, wie beispielsweise Gusseisen mit Kugelgraphit, hergestellt.

Die Erfindung wird durch die oben beschriebenen Ausführungsbeispiele nicht eingeschränkt, sondern ist im Rahmen der beigefügten Ansprüche modifizierbar.

So ist es z.B. denkbar, dass auch andere Werkstoffe zur Herstellung des Bremsträgers 1 und des Bremssattels 24 zur Verwendung kommen können.

### Bezugszeichenliste

- 1,1': Bremsträger
- 2: Verstärkungsrippe
- 2a: Ende
- 3: Außenrand
- 4: Grundfläche
- 5: Scheibenumgriff
- 6: Nabenschwung
- 7_{R}, 7_{Z}: Trägerhorn
- 8_{R}, 8_{Z}: Trägerhorn
- 9: Scheitelpunkt
- 10: Wendepunkt
- 11, 12: Stützstelle
- 13, 14, 15: Befestigungsstelle
- 16: Linie
- 17: Rahmenteil
- 18: Dreieckförmige Geometrie
- 19: Bremsscheibendrehachse
- 20: Bremsscheibe
- 21, 21': Scheibenbremse
- 22,23: Bremsbelag
- 24: Bremssattel
- 25, 26: Zugstrebe
- 27: Bremssattelrücken
- 28: Zuspannabschnitt
- 29: Korbbogen- bzw. Ellipsenabschnitt
- 30: Optimierte Geometrie
- B_{R}, B'_{R}, B_{Z}, B'_{Z}: Breite
- H: Ausdehnung
- R: Reaktionsseite
- S: Symmetrieachse
- Z: Zuspannseite
- x, y, z: Koordinaten

## Patentansprüche

1. Scheibenbremse (21), insbesondere Schiebesattelscheibenbremse, mindestens aufweisend einen ortsfest fixierten Bremsträger (1), der zwei Paar Trägerhörner (7_{R}, 8_{R}; 7_{Z}, 8_{Z}) aufweist, durch die ein reaktionsseitiger Bremsbelag (22) und ein zuspannseitiger Bremsbelag (23) gehalten werden, einen Bremssattel (24), der einen Bremssattelrücken (27) und einen Zuspannabschnitt (28) umfasst, wobei der Bremssattelrücken (27) an seinen Enden jeweils mit einer Zugstrebe (25, 26) versehen ist, sowie eine Zuspannmechanik, wobei der Abstand der Trägerhörner (7_{R}, 8_{R}) zueinander, die den reaktionsseitigen Bremsbelag (22) aufnehmen, größer ist, als der Abstand der Trägerhörner (7_{Z}, 8_{Z}) zueinander, die den zuspannseitigen Bremsbelag (23) aufnehmen, wobei die Trägerhörner (7_{R}, 8_{R}) auf einer Reaktionsseite (R) des Bremsträgers (1) kürzer ausgeführt sind als auf einer Zuspannseite (Z) des Bremsträgers (1) und wobei der reaktionsseitige Bremsbelag (22) und der zuspannseitiger Bremsbelag (23) und die zwei Paar Trägerhörner (7_{R}, 8_{R}; 7_{Z}, 8_{Z}) jeweils untereinander an Abstützflächen aneinander liegen.

2. Scheibenbremse (21) nach Anspruch 1, **dadurch gekennzeichnet, dass** der reaktionsseitige Bremsbelag (22) eine Breite aufweist, die größer ist als eine Breite des zuspannseitigen Bremsbelags (23).

3. Scheibenbremse (21) nach Anspruch 1 oder 2, **dadurch gekennzeichnet, dass** ein Volumen des reaktionsseitigen Bremsbelages (22) größer ist als ein Volumen des zuspannseitigen Bremsbelages (23).

4. Scheibenbremse (21) nach einem der vorstehenden Ansprüche, **dadurch gekennzeichnet, dass** der Bremssattelrücken (27) und der Zuspannabschnitt (28) jeweils auf einer Seite einer Bremsscheibe (20) parallel zu dieser angeordnet sind, wobei sich die Zugstreben (25, 26) parallel zu einer Bremsscheibendrehachse (19) über einen Abschnitt der Bremsscheibe (20) erstrecken, der von dem Bremssattel (24) und dem Bremsträger (1') übergriffen ist.

5. Scheibenbremse (21) nach einem der vorstehenden Ansprüche, **dadurch gekennzeichnet, dass** Verbindungsstellen zwischen den Zugstreben (25, 26) und dem Bremssattelrücken (27) des Bremssattels (24) mit einem Korbbogen bzw. einem Ellipsenabschnitt (29) verrundet sind.

6. Scheibenbremse (21) nach Anspruch 5, **dadurch gekennzeichnet, dass** die Zugstreben (25, 26) jeweils eine Geometrie (30) aufweisen, die sich zum Bremssattelrücken (27) hin verjüngt und schließlich in den Korbbogen bzw. in den Ellipsenabschnitt (29) einmündet.

7. Scheibenbremse (21) nach Anspruch 6, **dadurch gekennzeichnet, dass** die Geometrie (30) mit den Korbbögen (29) an den Seiten eine Art ellipsenförmiger Öffnung des Bremssattelrückens (27) des Bremssattels (24) bildet, wobei eine zuspannseitige Längsseite der Öffnung des Bremssattelrückens (27) kürzer ist als eine reaktionsseitige Längsseite der Öffnung des Bremssattelrückens (27).

8. Scheibenbremse (21) nach einem der vorgenannten Ansprüche, **dadurch gekennzeichnet, dass** ein resultierendes Kippmonent, das bei einem Bremsvorgang auf den Bremssattelrücken (27) wirkt, durch die Geometrie des reaktionsseitigen Bremsbelags (22) reduziert wird.

9. Scheibenbremse (21) nach einem der vorgenannten Ansprüche, **dadurch gekennzeichnet, dass** der Bremsträger (1) und der Bremssattel (24) durch ein Gießverfahren hergestellt sind.

10. Scheibenbremse (21) nach Anspruch 9, **dadurch gekennzeichnet, dass** der Bremsträger (1) und der Bremssattel (24) aus einem duktilen Gusswerkstoff hergestellt sind und/oder dass der Bremsträger (1) und der Bremsträger (24) aus Gusseisen mit Kugelgraphit hergestellt sind.

## Claims

1. A disk brake (21), in particular a sliding-caliper disk brake, having at least a positionally fixed brake carrier (1) which has two pairs of carrier horns (7_{R}, 8_{R}; 7_{Z}, 8_{Z}) by means of which a reaction-side brake pad (22) and an application-side brake pad (23) are held, a brake caliper (24) which comprises a brake caliper rear section (27) and an application section (28), the brake caliper rear section (27) being equipped at each end with a tension strut (25, 26), and an application mechanism, the spacing between the carrier horns (7_{R}, 8_{R}) that receive the reaction-side brake pad (22) being greater than the spacing between the carrier horns (7_{Z}, 8_{Z}) that receive the application-side brake pad (23), the carrier horns (7_{R}, 8_{R}) on a reaction side (R) of the brake carrier (1) being of shorter design than those on an application side (Z) of the brake carrier (1), and the reaction-side brake pad (22) and the application-side brake pad (23) and the two pairs of carrier horns (7_{R}, 8_{R}; 7_{Z}, 8_{Z}) each bearing against one another at support surfaces.

2. A disk brake (21) according to claim 1, **characterised in that** the reaction-side brake pad (22) has a width greater than a width of the application-side brake pad (23).

3. A disk brake (21) according to claim 1 or 2, **characterised in that** a volume of the reaction-side brake pad (22) is greater than a volume of the application-side brake pad (23).

4. A disk brake (21) according to any of the preceding claims, **characterised in that** both the brake caliper rear section (27) and the application section (28) are arranged on one side of and parallel to a brake disk (20), the tension struts (25, 26) extending parallel to a brake disk axis of rotation (19) over a section of the brake disk (20) which is overlapped by the brake caliper (24) and by the brake carrier (1').

5. A disk brake (21) according to any of the preceding claims, **characterised in that** connecting points between the tension struts (25, 26) and the brake caliper rear section (27) of the brake caliper (24) are rounded with a three-centred curve or an elliptical segment (29).

6. A disk brake (21) according to claim 5, **characterised in that** the tension struts (25, 26) each have a geometry (30) which tapers towards the brake caliper rear section (27) and finally opens out into the three-centred curve or elliptical segment (29).

7. A disk brake (21) according to claim 6, **characterised in that** the geometry (30) with the three-centred curves (29) at the sides forms a type of elliptical opening of the brake caliper rear section (27) of the brake caliper (24), an application-side longitudinal side of the opening of the brake caliper rear section (27) being shorter than a reaction-side longitudinal side of the opening of the brake caliper rear section (27).

8. A disk brake (21) according to any of the preceding claims, **characterised in that** a resultant tilting moment which acts on the brake caliper rear section (27) during a braking process is reduced by the geometry of the reaction-side brake pad (22).

9. A disk brake (21) according to any of the preceding claims, **characterised in that** the brake carrier (1) and the brake caliper (24) are produced by means of a casting process.

10. A disk brake (21) according to claim 9, **characterised in that** the brake carrier (1) and the brake caliper (24) are produced from a ductile cast material and/or the brake carrier (1) and the brake carrier (24) are produced from spherulitic graphite cast iron.

## Revendications

1. Frein à disque (21), notamment frein à disque à étrier coulissant, au moins comportant un porteur (1) fixe de frein, qui comporte deux paires de cornets (7_{R}, 8_{R}; 7_{Z}, 8_{Z}) de porteur, par lesquels une garniture (22) de frein du côté de la réaction et une garniture (23) de frein du côté d'application sont maintenues, un étrier (24) de frein, qui comprend une section (27) arrière d'étrier de frein et une section (28) d'application, la section (27) arrière d'étrier de frein étant munie à ses extrémités respectives d'un jambage (25, 26) d'application respectif, ainsi qu'un mécanisme d'application de frein, la distance entre la paire de cornets (7_{R}, 8_{R}) de porteur, qui reçoivent la garniture (22) de frein du côté de la réaction, est supérieure à la distance entre les cornets (7_{Z}, 8_{Z}) de porteur, qui reçoivent la garniture (23) de frein du côté de l'application, les cornets (7_{R}, 8_{R}) de porteur étant réalisés plus courts sur un côté (R) de réaction du porteur (1) de frein que sur un côté (Z) d'application du porteur (1) de frein et la garniture (22) de frein du côté de la réaction et la garniture (23) de frein du côté de l'application et les deux paires de cornets (7_{R}, 8_{R}; 7_{Z}, 8_{Z}) de porteur se trouvant les uns à côté des autres, superposés sur des surfaces de support.

2. Frein à disque (21) suivant la revendication 1, **caractérisé en ce que** la garniture (22) de frein du côté de la réaction a une largeur qui est supérieure à une largeur de la garniture (23) de frein du côté de l'application.

3. Frein à disque (21) suivant la revendication 1 ou 2, **caractérisé en ce qu'**un volume de la garniture (22) de frein du côté de la réaction est supérieur à un volume de la garniture (23) de frein du côté de l'application.

4. Frein à disque (21) suivant l'une des revendications précédentes, **caractérisé en ce que** la section (27) arrière d'étrier de frein et la section (28) d'application sont disposées d'un côté d'un disque (20) de frein parallèlement à ce dernier, les jambages (25, 26) d'application s'étendant parallèles à un axe (19) de rotation de disque du frein sur une section du disque (20) de frein, qui est chevauchée par l'étrier (24) de frein et le porteur (1') de frein.

5. Frein à disque (21) suivant l'une des revendications précédentes, **caractérisé en ce que** des points de liaison entre les jambages (25, 26) d'application et la section (27) arrière d'étrier de frein de l'étrier (24) de frein sont arrondis avec une forme de courbure à trois centres ou un segment (29) elliptique.

6. Frein à disque (21) suivant la revendication 5, **caractérisé en ce que** les jambages (25, 26) d'application ont respectivement une géométrie (30) qui rétrécit vers la section (27) arrière d'étrier de frein et ensuite débouche dans la section (29) elliptique ou en forme de courbe à trois centres.

7. Frein à disque (21) suivant la revendication 6, **caractérisé en ce que** la géométrie (30) forme avec la courbure (29) à trois centres sur les côtés un genre d'ouverture de forme elliptique de la section (27) arrière d'étrier de frein de l'étrier (24) de frein, un côté en longueur du côté d'application de l'ouverture de la section (27) arrière d'étrier de frein étant plus court qu'un côté en longueur du côté de la réaction de l'ouverture de la section (27) arrière d'étrier de frein.

8. Frein à disque (21) suivant l'une des revendications précédentes, **caractérisé en ce qu'**un moment de basculement résultant, qui agit lors d'une opération de freinage sur la section (27) arrière d'étrier de frein, est réduit par la géométrie de la garniture (22) de frein du côté de la réaction.

9. Frein à disque (21) suivant l'une des revendications précédentes, **caractérisé en ce que** le porteur (1) de frein et l'étrier (24) de frein sont fabriqués par un procédé de coulage.

10. Frein à disque (21) suivant la revendication 9, **caractérisé en ce que** le porteur (1) de frein et l'étrier (24) de frein sont fabriqués en une matière de coulage ductile et/ou **en ce que** le porteur (1) de frein et l'étrier (24) de frein sont fabriqués en acier coulé avec du graphite sphéroïdal.
